# EUROPEAN PATENT APPLICATION

(11) **EP 1 377 021 A2**
(43) Date of publication of application: **02.01.2004**
(21) Application number: 03014298.8
(22) Date of filing: 25.06.2003
(51) Int. Cl.: H04N 1/21, H04N 7/14

(54) **Image data processing method, portable terminal apparatus, and computer program**

(30) Priority: 26.06.2002 JP 2002185871
(71) Applicant: Fuji Photo Film Co., Ltd., Kanagawa-ken (JP)
(72) Inventor: Takemoto, Fumito c/o Fuji Photo Film Co., Ltd., Ashigarakami-gun, Kanagawa-ken (JP)
(74) Representative: Klunker . Schmitt-Nilson . Hirsch

(57) **Abstract**

To obtain images including people who are not present at a photography scene with a portable terminal apparatus such as a cellular telephone with built in camera. A first processed image obtained by a first cellular telephone with built in camera is displayed on an LCD monitor, and a region thereof that includes a person is trimmed. A second processed image transmitted from a second cellular telephone with built in camera is displayed on the LCD monitor, and a region thereof that includes a person is trimmed. The trimmed first and second processed images are combined to obtain a synthesized image, which is displayed on the LCD monitor.

## Description

### BACKGROUND OF THE INVENTION

### Field of the Invention

The present invention relates to a portable terminal apparatus such as a cellular telephone with a built in camera that obtains image data by photography, an image data processing method for use by the portable terminal apparatus, and a program that causes a computer to execute the image data processing method.

### Description of the Related Art

Cellular telephones are rapidly becoming widespread. In recent years, cellular telephones with built in cameras as imaging means for obtaining image data by photography (as disclosed in, e.g., Japanese Unexamined Patent Publication Nos. 6(1994)-233020, 9(1997)-322114, 10(1998)-150523 and 2000-253290) are also spreading. By using such cellular telephones with built in cameras, favored image data obtained by photography may be set as the wallpaper for the cellular phone's display. In addition, image data obtained by photography can be attached to e-mail messages and sent to friends. Therefore, in case an appointment must be cancelled, or if one is running late for an appointment, an image of one's face showing a sorrowful expression may be sent to a friend, thereby informing them of one's current situation. In this manner, cellular telephones with built in cameras are useful in communicating with friends.

Meanwhile, image data having been obtained by cellular telephones with built in cameras are being utilized in manners such as: administering various image processes thereon to obtain processed image data; printing; and being uploaded to networks. In this manner, users are capable of obtaining images of high image quality, obtaining prints, and accessing images on networks. Therefore, the manners of use for image data by communication are becoming diversified.

The image data obtained by cellular telephones with built in cameras is utilized by: transmitting the image data from the cellular telephone with built in camera that obtained the image to an image server for storing and managing image data; image processes being administered on the image data at the image server; generating an e-mail message with a URL representing the storage location of the image data; sending the e-mail message to a terminal apparatus such as a cellular telephone, a PC (personal computer) or a PDA, or to a laboratory for performing printing of the image; then downloading the image data to the cellular telephone, the terminal apparatus, or the laboratory by accessing the URL provided in the e-mail message.

Exchange of image data among friends by employing cellular telephones with built in cameras is enjoyable. However, the subjects of photography are limited to those people who are at the scene of photography. Therefore, it is not possible to obtain images including people who are not in the scene of photography, such as the person who transmits the image data and the person who receives the image data.

### SUMMARY OF THE INVENTION

The present invention has been developed in view of the circumstances described above, and it is the object of the present invention to enable obtainment of images including people who are not in the scene of photography, by a portable terminal apparatus such as a cellular telephone with built in camera.

An image data processing method according to the present invention is an image data processing method for a portable terminal apparatus comprising:
an imaging means for obtaining first image data by photography;
a communication means for transmitting and receiving data;
an image processing means for administering image processes on the first image data to obtain processed image data; and
a display means for performing various types of display; the method being implemented by:
   combining other image data transmitted by other portable terminal apparatuses with the first image data to obtain synthesized image data.

Note that in the image data processing method according to the present invention, the synthesized image data may be obtained by trimming images representing the other image data and an image representing the first image data to match the size of the display means.

A portable terminal apparatus according to the present invention comprises:
an imaging means for obtaining first image data by photography;
a communication means for transmitting and receiving data;
an image processing means for administering image processes on the first image data to obtain processed image data;
a display means for performing various types of display; and
a synthesizing means for combining other image data transmitted by other portable terminal apparatuses with the first image data to obtain synthesized image data.

Note that in the portable terminal apparatus according to the present invention, the synthesizing means may perform trimming of the images representing the other image data and an image representing the first image data to match the size of the display means, to obtain the synthesized image data.

Note that the image data processing method according to the present invention may be provided as a program that causes a computer to execute the image data processing method.

According to the present invention, first image data which is obtained by a portable terminal apparatus is combinable with other image data which has been transmitted from, for example, a portable terminal apparatus of a friend, to obtain synthesized image data. Therefore, it is possible to obtain images that include people who are not in the scene of photography.

The size of the display means of portable terminal apparatuses is not large. By combining the first image data obtained by the portable terminal apparatus and the other image data which has been transmitted from the other portable terminal apparatus after trimming each of the image data, a synthesized image may be obtained that matches the size of the display means.

### BRIEF DESCRIPTION OF THE DRAWINGS

Figure 1 is a schematic block diagram of an image processing system equipped with a portable terminal apparatus according to an embodiment of the present invention.
Figure 2A, Figure 2B, Figure 2C, Figure 2D, and Figure 2E are diagrams that illustrate image synthesis.
Figure 3 is a schematic block diagram illustrating the processes which are performed by the image processing means.
Figure 4 is a flow chart that shows the processes performed by the cellular telephone with built in camera 1.
Figure 5 is a flow chart that shows the processes performed by the image server.
Figure 6 is a flow chart that shows the processes performed by the laboratory.
Figure 7 is a flow chart that shows the processes performed by the cellular telephone with built in camera 2.
Figure 8 is a flow chart that shows the synthesis process performed by the cellular telephone with built in camera 2.
Figure 9 is a diagram that shows another form of image synthesis.
Figure 10 is a diagram that shows still another form of image synthesis.

### DESCRIPTION OF THE PREFERRED EMBODIMENTS

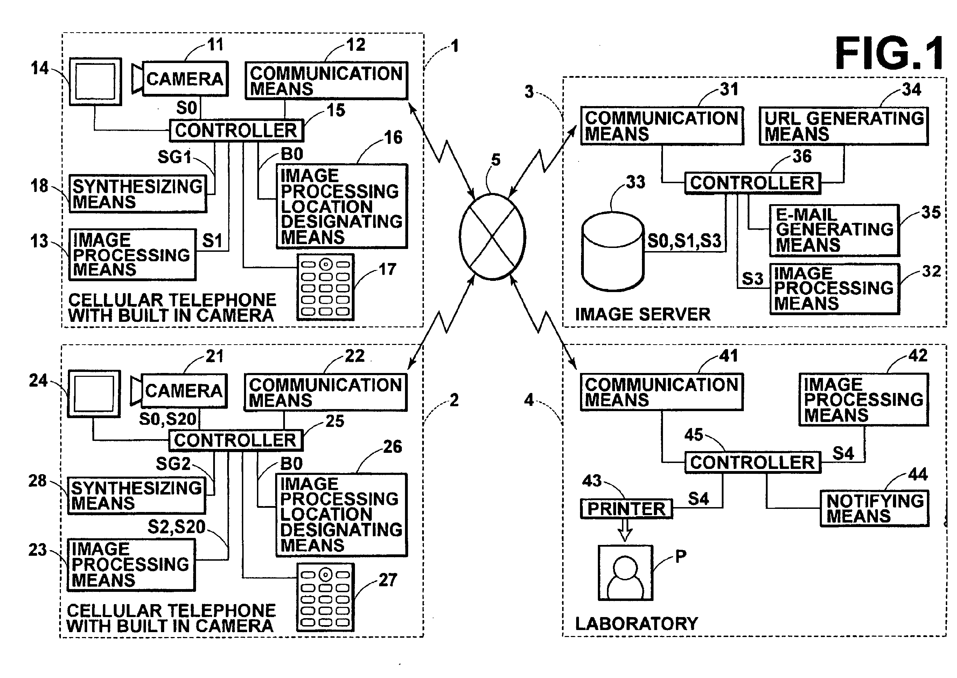

Hereinafter, embodiments of the present invention will be described with reference to the attached figures. Figure 1 is a schematic block diagram of an image processing system equipped with a portable terminal apparatus according to an embodiment of the present invention.

As shown in Figure 1, the image processing system according to the present embodiment comprises: cellular telephones with built in cameras 1 and 2; an image server 3 for storing and managing image data S0 obtained by the cellular telephones with built in cameras 1 and 2; a laboratory 4 for printing the image data S0; and a cellular telephone communication network 5 via which data is exchanged among the constituents of the system.

As shown in Figure 1, the image processing system according to the present embodiment comprises: cellular telephones with built in cameras 1 and 2; an image server 3 for storing and managing image data S0 obtained by the cellular telephones with built in cameras 1 and 2; a laboratory 4 for printing the image data S0; and a cellular telephone communications network 5 via which data is exchanged among the constituents of the system.

The cellular telephone with built in camera 1 comprises: a camera 11 for obtaining image data S0 by photography; a communication means 12 for transmitting and receiving various types of data including the image data S0; an image processing means 13 for administering image processes on the image data S0 to obtain processed image data S1; an LCD (Liquid Crystal Display) monitor 14 for performing various types of display including images and telephone numbers; a controller 15 for controlling the operations of the cellular telephone with built in camera 1; an image processing location designating means 16 for designating the location at which image processes are to be administered on the image data S0 based on the intended use of the image data S0 and/or desired image quality thereof, as will be described below, and generating location data B0; an input means 17 comprising a plurality of buttons for performing various types of input, such as photography operations by the camera 11, transmission commands for the image data S0, input of the intended use and/or the desired image quality of the image data S0, the transmission destination of the image data S0 or the processed image data S1, specification of whether printing is to be performed, specification of whether the image data is to be stored in the image server 3, and commands for administering image processes on the image data S0; and a synthesizing means 18 for combining the processed image data S1, which has been obtained and processed by the cellular telephone with built in camera 1, with processed image data S2, which has been transmitted from another portable terminal apparatus such as the cellular telephone with built in camera 2, to obtain synthesized image data SG1.

The cellular telephone with built in camera 2 comprises: a camera 21 for obtaining image data S0 by photography; a communication means 22 for transmitting and receiving various types of data including the image data S0; an image processing means 23 for administering image processes on the image data S0 obtained by the cellular telephone with built in camera 1 or on the image data S0 obtained by the cellular telephone with built in camera 2 to obtain processed image data S2 or S20; an LCD (Liquid Crystal Display) monitor 24 for performing various types of display including images and telephone numbers; a controller 25 for controlling the operations of the cellular telephone with built in camera 1; an image processing location designating means 26 for designating the location at which image processes are to be administered on the image data S0 based on the intended use of the image data S0 and/or desired image quality thereof, as will be described below, and generating location data B0; an input means 27 comprising a plurality of buttons for performing various types of input, such as photography operations by the camera 21, transmission commands for the image data S0, input of the intended use and/or the desired image quality of the image data S0, the transmission destination of the image data S0 or the processed image data S2, specification of whether printing is to be performed, specification of whether the image data is to be stored in the image server 3, and commands for administering image processes on the image data S0; and a synthesizing means 28 for combining the processed image data S20, which has been obtained and processed by the cellular telephone with built in camera 2, with processed image data S1, which has been transmitted from another portable terminal apparatus such as the cellular telephone with built in camera 1, to obtain synthesized image data SG2.

Note that in the present embodiment, the image data S0 is obtained by the cellular telephone with built in camera 1, an image processing location at which image processes are to be administered on the image data S0 is designated, and the cellular telephone with built in camera 2 is specified as one of the transmission destinations of the image data S0 or the processed image data S1.

In addition, the image processing system of the present embodiment will be described as that in which processed image data S20, obtained by the image processing means 23 administering image processes on image data S0 obtained by the cellular telephone with built in camera 2, is combined with processed image data S1, transmitted from the cellular telephone with built in camera 1 or image data S2, obtained by the image processing means 23 administering image processes on image data S0 transmitted from the cellular telephone with built in camera 1, to obtain synthesized image data SG2.

The image processing means 13 obtains processed image data S1 by administering image processes, such as density correction, white balance adjustment, gradation correction, color correction, and a sharpness process, on the image data S0. Note that the image processing means 13 is not capable of performing image processes as advanced as image processing means of the image server 3 or the laboratory 4, to be described later. Accordingly, the obtained processed image data S1 is suitable for display on the LCD monitor 14, but not suitable for printing or for display on a large monitor such as that of a PC.

The image processing location designating means 16 designates the location at which image processes are to be administered on the image data S0 based on the intended use of the image data S0 and/or the desired image quality thereof, input by the user from the input means 17, and generates location data B0 regarding the location at which image processes are to be administered. For example, in the case that the intended use of the image data S0, input by the user, is for display on the monitor of a cellular telephone, and/or that the desired image quality is low, high image quality is not required of the image data S0. Therefore, the image processing location designating means 16 designates the location of image processing to be the cellular telephone with built in camera 1, and generates location data B0. Note that in the case that the image data S0 is to be transmitted to the cellular telephone with built in camera 2, the image processing location may be designated to be the cellular telephone with built in camera 2, and the location data B0 may be generated to indicate such a designation. In this case, the designation of the image processing location may be performed based on the transmission destination data for the image data S0, input from the input means 17.

Note that the intended use and/or the desired image quality may be directly input from the input means 17. Alternatively, a configuration may be adopted wherein a variety of intended uses and/or levels of image quality are displayed on the LCD monitor 14, and the user selects a desired intended use and/or a level of image quality.

In addition, in the case that the intended use of the image data S0 is storage in the image server 3, the image data S0 is employed by being downloaded from the image server 3 to a terminal apparatus such as a PC, and displayed on a monitor thereof. Therefore, a mid-level image quality which is not as high as that for printing is required. Accordingly, in the case that the intended use and/or desired image quality input from the input means 17 is storage in the image server 3 and/or mid-level image quality, the image processing location designating means 16 designates the image server 3 as the image processing location and generates location data B0 indicating such designation.

Further, in the case that the intended use of the image data S0 is printing, high image quality is required of the image data S0. In addition, in the case that the desired image quality is high, it is often the case that printing is desired. Accordingly, in the case that the intended use and/or desired image quality input from the input means 17 is printing and/or high image quality, the image processing location designating means 16 designates the laboratory 4 as the image processing location and generates location data B0 indicating such designation.

The communication means 12 transmits the image data S0 or the processed image data S1 to the image server 3 via the cellular telephone communication network 5. The location data B0 and transmission destination data that represents the transmission destination (such as the laboratory 4, the cellular telephone with built in camera 2, an e-mail address of a friend of the user of the cellular telephone with built in camera 1) of the image data S0 or the processed image data S1 is transmitted along with the transmitted image data. Note that in the case that the intended use of the image data S0 is printing, receiver data that represents a receiver of the prints (the receiver data may be any data as long as the receiver can be specified; for example, a cellular telephone number will suffice) is also transmitted.

Here, the only cases in which the unprocessed image data S0 is transmitted is when the image processing location has been designated to be the image server 3, the laboratory 4, or the cellular telephone with built in camera 2. On the other hand, in the case that the cellular telephone with built in camera 1 is designated as the image processing location, image processes are administered on the image data S0 by the image processing means 13 to obtain processed image data S1 Then, the processed image data S1 is transmitted to the image server 3 along with the location data B0 (in this case, representing the cellular telephone with built in camera 1).

The synthesizing means 18 obtains synthesized image data SG1 by combining a processed image G1 that represents the processed image data S1 and an image that represents image data transmitted from another portable terminal apparatus such as the cellular telephone with built in camera 2. Note that in the present embodiment, image synthesis is performed by the cellular telephone with built in camera 2. Therefore, image synthesis by the synthesizing means 28 will be described in detail.

Note that the communication means 22, the image processing means 23 and the image processing location designating means 26 of the cellular telephone with built in camera 2 have the same functions as the communication means 12, the image processing means 13, and the image processing location designating means 16, respectively.

The synthesizing means 28 obtains synthesized image data SG2 by combining processed image data S20, obtained by the image processing means 23 administering image processes on image data S0 obtained by the cellular telephone with built in camera 2, with processed image data S1, transmitted from the cellular telephone with built in camera 1 or image data S2, obtained by the image processing means 23 administering image processes on image data S0 transmitted from the cellular telephone with built in camera 1.

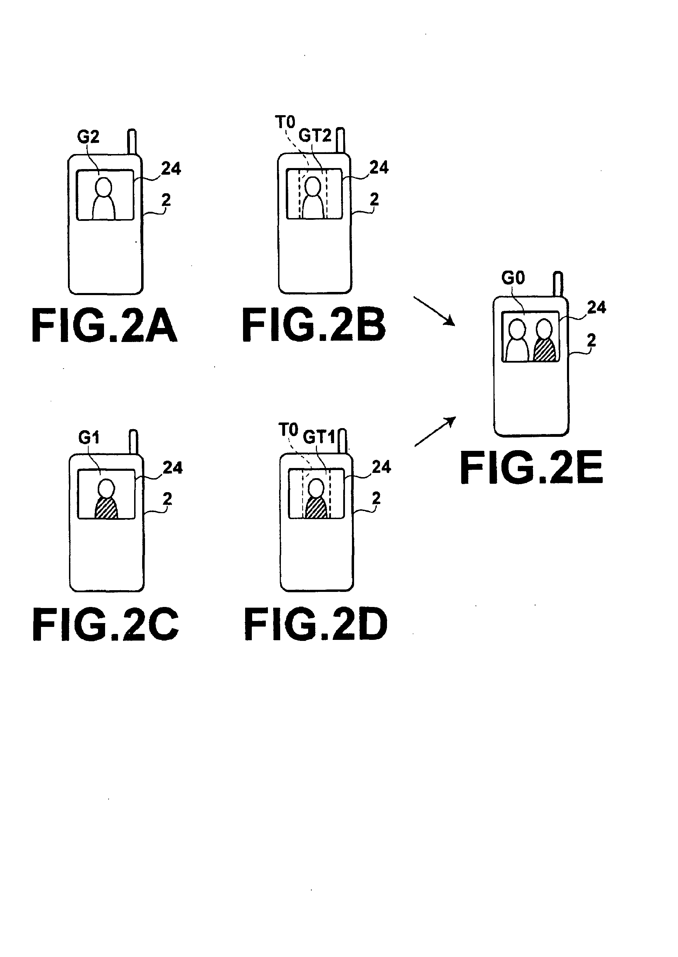

Figure 2A, Figure 2B, Figure 2C, Figure 2D, and Figure 2E are diagrams that illustrate image synthesis. First, a processed image G2 that represents the processed image data S20 is displayed on the LCD monitor 24, as shown in Figure 2A. Then, according to a command from the input means 27, a trimming frame T0 is displayed on the LCD monitor 24 as shown in Figure 2B. The trimming frame T0 trims the processed image G2 so that it is 1/2 as long in the horizontal direction. A user of the cellular telephone with built in camera 2 operates the input means 27 to move the trimming frame T0 and specifies the region to be trimmed.

Next, the processed image G1 that represents the processed image data S1 or the processed image data S2 is displayed on the LCD monitor, as shown in Figure 2C. Then, according to a command from the input means 27, a trimming frame T0 is displayed on the LCD monitor 24 as shown in Figure 2D. The trimming frame trims the processed image G1 so that it is 1/2 as long in the horizontal direction. The user of the cellular telephone with built in camera 2 operates the input means 27 to move the trimming frame and specifies the region to be trimmed.

Note that trimming of either the processed image G1 or the processed image G2 may be performed first.

Then, when the user inputs a synthesize command from the input means 27, the trimmed processed image GT2 and the trimmed processed image GT1 are combined to obtain synthesized image data SG2, and a synthesized image G0 that represents the synthesized image data SG2 is displayed on the LCD monitor 24, as shown in Figure 2E.

The image server 3 comprises: a communication means 31 for transmitting and receiving various types of data such as the image data S0; an image processing means 32 for administering image processes on the image data S0 to obtain processed image data S3; a storage means 33 for storing the image data S0 or the processed image data S1 which has been transmitted from the cellular telephone with built in camera 1; a URL generating means 34 for generating a URL representing the storage location of the image data S0 or the processed image data S1; an e-mail generating means 35 for generating an e-mail message with the URL generated by the URL generating means 34 attached thereto; and a controller 36 for controlling the operations of the image server 3.

The image processing means 32 administers image processes, such as density correction, white balance adjustment, gradation correction, color correction, and a sharpness process, on the image data S0 to obtain processed image data S3, in the case that the image data S0 is transmitted to the image server 3 and the image processing location indicated by the location data B0 is the image server 3. Note that the image processes performed by the image processing means 32 are those that enable display of the processed image data S3 on a monitor at a suitable image quality.

The storage means 33 stores the processed image data S1 in the case that the processed image data S1 is transmitted from the cellular telephone with built in camera 1. In the case that unprocessed image data S0 has been transmitted and the image processing location indicated by the location data B0 is the image server 3, the storage means 33 stores the processed image data S3 obtained by the image processing means 32. Further, in the case that unprocessed image data S0 has been transmitted and the image processing location indicated by the location data B0 is the cellular telephone with built in camera 2 or the laboratory 4, the storage means 33 stores the unprocessed image data S0.

The URL generating means 34 generates a URL that represents the storage location of the image data S0, the processed image data S1, or the processed image data S3.

The e-mail generating means 35 generates an e-mail message with the URL generated by the URL generating means 34 attached thereto, based on the transmission destination data which has been transmitted along with the image data S0 or the processed image data S1. Note that the generated e-mail message is transmitted to the transmission destination indicated by the transmission destination data by the communication means 31 via the cellular telephone communication network 5.

The laboratory 4 comprises: a communication means 41 for transmitting and receiving various types of data such as the image data S0; an image processing means 42 for administering image processes on the image data S0 to obtain processed image data S4; a printer 43 for printing the processed image data S4 to obtain a print P; a notification means 44 for notifying the cellular telephone with built in camera 1 that printing has been completed; and a controller 45 for controlling the operations of the laboratory 4.

When the laboratory 4 receives an e-mail transmitted thereto by the image server 3, the communication means 41 refers to the URL attached to the e-mail message and downloads the image data S0 from the storage means 33 of the image server 3. Note that the receiver data that indicates the receiver of the prints P is downloaded simultaneously with the image data S0.

The image processing means 42 administers image processes, such as density correction, white balance adjustment, gradation correction, color correction, and a sharpness process, on the image data S0 downloaded from the storage means 33 of the image server 3 to obtain processed image data S4. Here, in the case that the e-mail message is transmitted to the laboratory 4, it is clear that the image processes are to be administered to the image data S0 at the laboratory 4. However, it is preferable to refer to the location data B0 to confirm that the image processing location is the laboratory 4. Note that the image processes performed by the image processing means 42 are those that enable printing of the processed image data S4 at a suitable image quality.

The notification means 44 notifies the receiver of the prints, indicated by the receiver data, that printing has been completed, when printing of the processed image data S4 is complete. The notification may be in the form of an e-mail message or an automated voice message transmitted by telephone. Alternatively, an operator at the laboratory 4 may call the receiver on the telephone, or transmit an e-mail message to the receiver by a manual operation.

Note that in the case that the image server 3 transmits the e-mail message to the cellular telephone with built in camera 2, the user of the cellular telephone with built in camera 2 refers to the URL, accesses the storage means 33 of the image server 3, and downloads the image data S0 or the processed image data S1 Note that in the case that the processed image data S1 is downloaded, the processed image data S1 is displayed on the LCD monitor 24 as is. On the other hand, in the case that the image data S0 is downloaded, image processes are administered thereon by the image processing means 23 to obtain processed image data S2, which is then displayed on the LCD monitor 24. Further, image correcting processes are administered on the processed image data S2 by the image correcting means 28, in accordance with user operation of the cellular telephone with built in camera 2, to obtain processed image data S2, which is then displayed on the LCD monitor 24.

Note that in the case that the email message with the URL indicating the storage location of the unprocessed image data S1 attached thereto is transmitted to the cellular telephone with built in camera 2, it is clear that image processes are to be administered on the image data S0 at the cellular telephone with built in camera 2. However, it is preferable to refer to the location data B0 to confirm that the image processing location is the cellular telephone with built in camera 2.

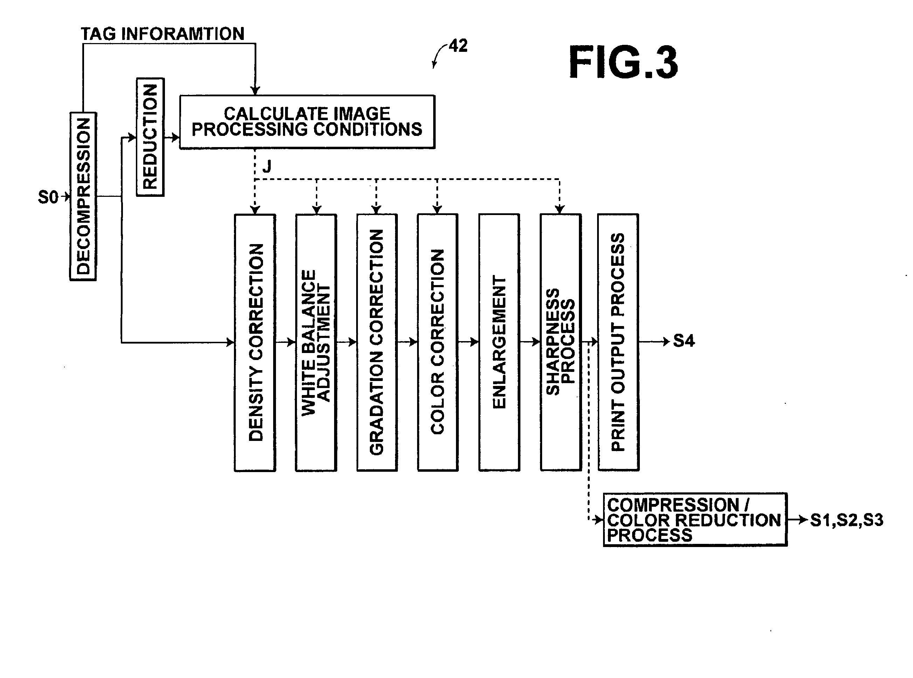

Here, the processes performed by the image processing means will be described. Figure 3 is a schematic block diagram illustrating the processes which are performed by the image processing means 42 of the laboratory 4. The image data S0 is compressed in JPEG format or the like. Therefore, first, the image data S0 is decompressed, then reduced in size by the image processing means 42, as shown in Figure 3. Then, image processing conditions J for use in image processing are calculated, based on the reduced image data S0 and tag information attached thereto, describing the photography conditions during photography thereof.

Then, processed image data S4 is obtained by administering image processes, such as density correction, white balance adjustment, gradation correction, color correction, and a sharpness process, on the image data S0, based on the calculated image processing conditions J. Note that although not based on the image processing conditions J, an enlargement process is performed so as to match the size of the image represented by the image data S0 to its output size (print size, monitor size, etc.) prior to the administration of the sharpness process. Here, enlargement processes include those that employ magnifications of less than 1x.

Here, the density correction and white balance processes correct exposure errors and white balance errors during photography. The gradation process absorbs the differences in contrast between the scene of photography and a print. The color correction process corrects the hue, chroma and brightness of each of the colors Red, Green and Blue. The sharpness process corrects the sharpness of the image. In addition, a print output process that converts the image data to device signals of the printer 43 following the sharpness process is performed.

Note that image processes are performed in a similar manner by the image processing means 13 and 23 of the cellular telephones with built in cameras 1 and 2, and the image processing means 32 of the image server 3. However, there are limitations in the transmission capacity and the color display ability of the display medium of the cellular telephones with built in cameras 1 and 2, and the image server 3. Therefore, processed image data S1, S2, or S3 is obtained by performing compression processes to reduce the amount of data, color reduction processes to reduce the number of colors, or the like following the sharpness process, as indicated by the broken line in Figure 3. The LCD monitors 14 and 24 of the cellular telephones with built in cameras 1 and 2 have narrower color reproduction ranges than a monitor of a PC. Therefore, color reduction processes are performed so as to effectively utilize the narrow color reproduction ranges thereof.

In addition, image processes are administered on the image data S0 by simpler calculations at the image processing means 13 and 23 of the cellular telephones with built in cameras 1 and 2, compared to those of the image processing means 32 and 42 of the image server 3 and the laboratory 4. Further, there are cases in which the color correction process and the sharpness process are omitted by the image processing means 13 and 23.

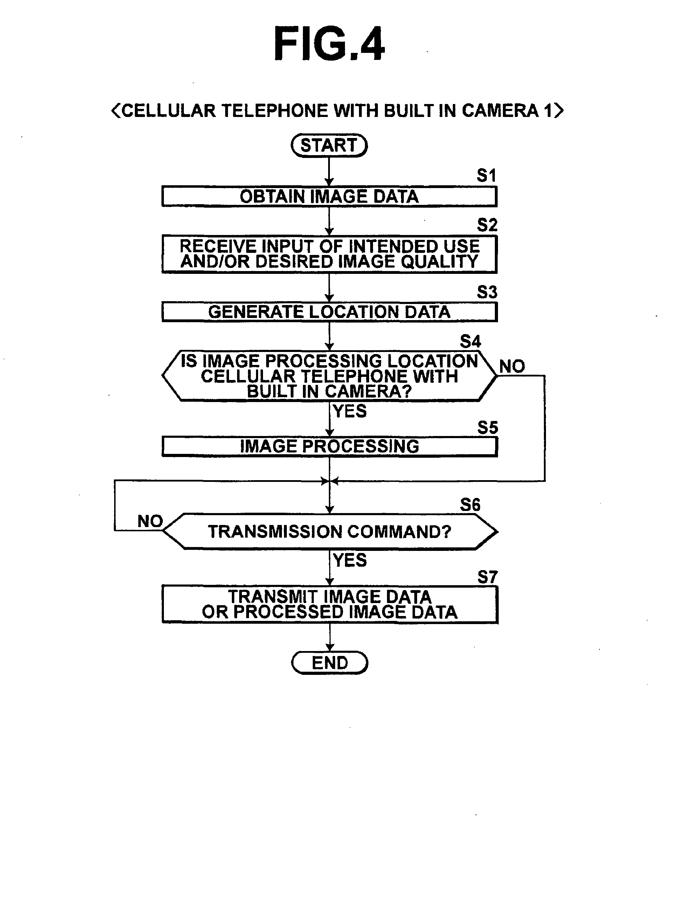

Next, the operation of the present embodiment will be described. Figure 4 is a flow chart that shows the processes performed by the cellular telephone with built in camera 1. First, image data S0 is obtained by the camera 11 (step S1). The intended use and/or desired image quality for the image data S0 is input by the user of the cellular telephone with built in camera 1 at the input means 17 (step S2). Then, the image processing location designating means 16 designates the image processing location at which image processes are to be administered on the image data S0, based on the input intended use and/or the desired image quality, and location data B0 is generated (step S3).

Next, the controller 15 judges whether the image processing location is the cellular telephone with built in camera, by referring to the location data B0 (step 34). In the case that the judgment in step S4 is affirmative, the image processing means 13 administers image processes on the image data S0 to obtain processed image data S1 (step S5). Then, the operation proceeds to step S6. In the case that the judgment in step S4 is negative, the operation proceeds directly to step S6.

At step S6, monitoring is initiated to judge whether a transmission command is input by the user. If the judgment in step S6 is affirmative, the image data S0 or the processed image data S1 is transmitted to the image server 3 (step S7), along with the location data B0, the transmission destination data, and, in the case that printing is requested, the receiver data for the prints P. The processes performed by the cellular telephone with built in camera 1 are thus completed.

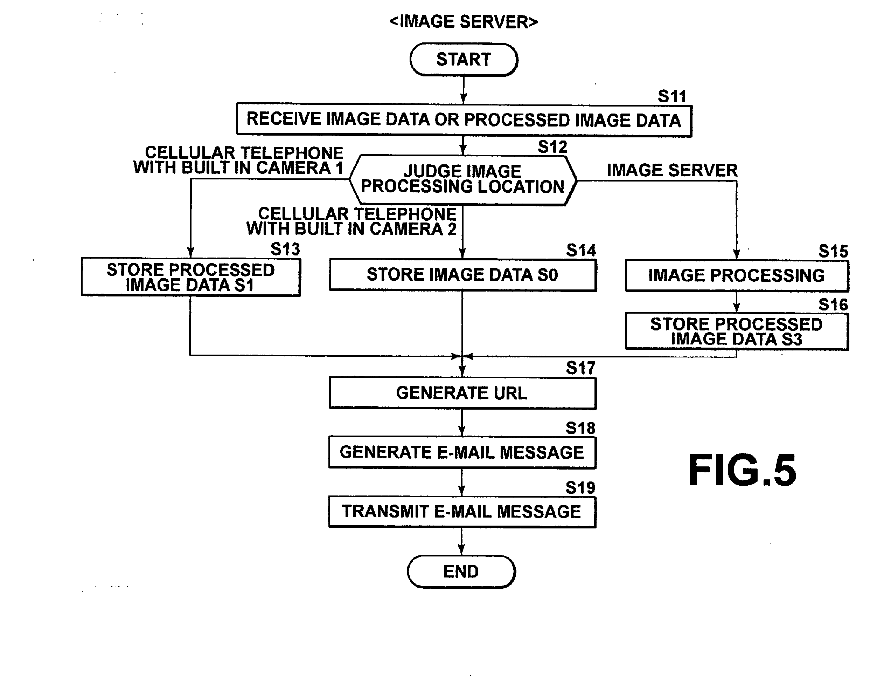

Figure 5 is a flow chart that shows the processes performed by the image server 3. First, the image data S0 or the processed image data S1 transmitted by the cellular telephone with built in camera 1 is received (step S11). Then, the image processing location of the image data S0 is judged, based on the location data B0 attached to the image data S0 or the processed image data S1 (step S12).

In the case that the image processing location is judged to be the cellular telephone with built in camera 1, it is known that the processed image data S1 has been transmitted. Therefore, the processed image data S1 is stored in the storage means 33 (step S13). In the case that the image processing location is judged to be the cellular telephone with built in camera 2 or the laboratory 4, the unprocessed image data S0 is stored in the storage means (step S14). In the case that the image processing location is judged to be the image server 3, image processes are administered on the image data S0 by the image processing means 32 to obtain processed image data S3 (step S15). Then, the processed image data S3 is stored in the storage means 33 (step S16).

After the image data S0, the processed image data S1 or the processed image data S3 is stored in the storage means 33, the URL generating means generates a URL that represents the storage location of the image data S0, the processed image data S1, or the processed image data S3 (step S17). Then, the e-mail generating means 35 generates an e-mail message with the URL attached thereto (step S18). Finally, the e-mail message is transmitted to a transmission destination according to the transmission destination data, which had been attached to the image data S0 or the corrected processed image data S1' (step S19), and the processes performed by the image server 3 are thus completed.

Note that in the case that the transmission destination of the e-mail message is the cellular telephone with built in camera 2, a description is given in the e-mail message as to whether the URL attached thereto indicates the storage location of the image data S0 or the processed image data S1.

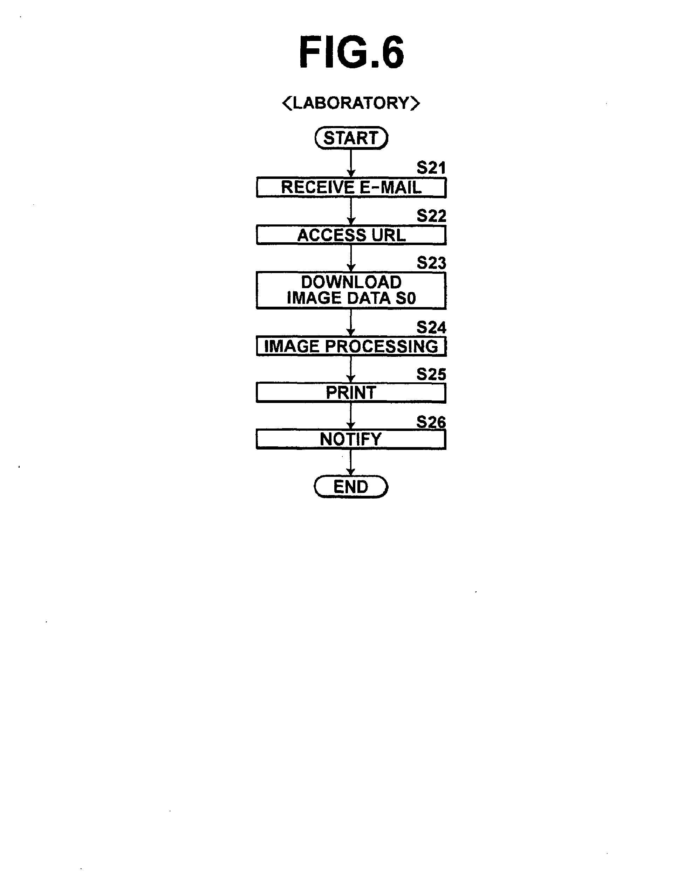

Figure 6 is a flow chart that shows the processes performed by the laboratory 4. First, the e-mail message transmitted by the image server 3 is received (step S21). Next, the communication means 41 accesses the URL attached to the e-mail message (step S22), and the image data S0 is downloaded (step S23). Then, the image processing means 42 administers image processes on the image data S0 to obtain processed image data S4 (step S24). The processed image data S4 is output by the printer 43, and prints P are obtained (step S25) . When printing is completed, the notification means 44 notifies the receiver of the prints P that the printing has been completed (step 26), thus completing the processes performed by the laboratory 4.

Note that the prints P may be picked up at the laboratory 4 by the receiver of the prints P (for example, the user of the cellular telephone with built in camera 1) who has been notified by the notification means 44, or they may be delivered to the receiver.

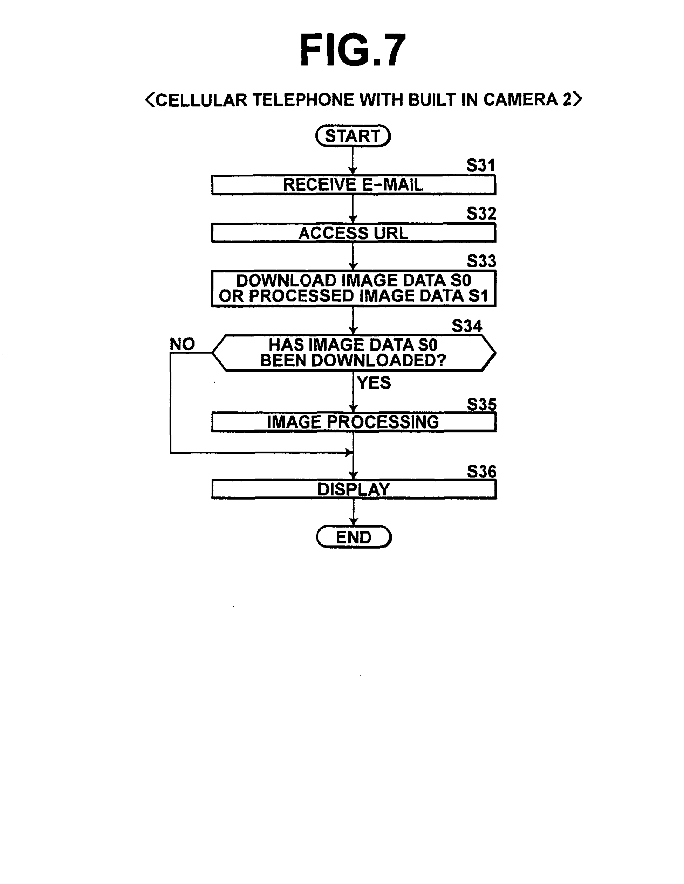

Figure 7 is a flow chart that shows the processes performed by the cellular telephone with built in camera 2. First, the e-mail message transmitted by the image server 3 is received (step S31). Next, the communication means 22 accesses the URL attached to the e-mail message (step S32), and the image data S0 or the processed image data S1 is downloaded (step S33).

Then, whether the downloaded image data is the unprocessed image data S0 is judged based on the description in the e-mail message (step S34). If the judgment in step S44 is affirmative, it is judged that the unprocessed image data S0 has been downloaded. Therefore, the image processing means 23 administers image processes to the image data S0 to obtain processed image data S2 (step S35). The processed image data S2 is displayed on the LCD monitor 24 (step S36) , thus completing the processes performed by the cellular telephone with built in camera 2.

On the other hand, if the judgment in step S44 is negative, it is judged that the processed image data S1 has been downloaded. Therefore, the processed image data S1 is displayed on the LCD monitor 24 (step S36), thus completing the processes performed by the cellular telephone with built in camera 2.

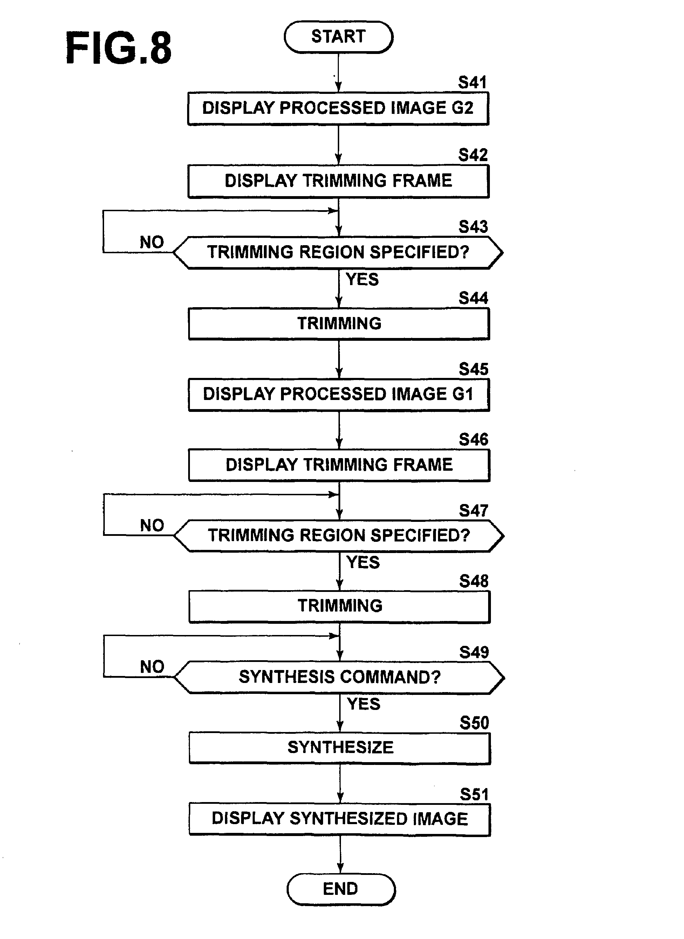

Figure 8 is a flow chart that shows the synthesis process performed by the cellular telephone with built in camera 2. Note that here, a description will be given of a case in which processed image data S20 has already been obtained, and synthesized image data SG2 is to be obtained by combining the processed image data S20 with the processed image data S1 which has been transmitted from the cellular telephone with built in camera 1.

First, the processed image G2 that represents the processed image data S20 is displayed on the LCD monitor 24 (step S41) in response to an image display command from the input means 27. Next, the trimming frame T0 is displayed on the LCD monitor 24 (step S42) according to a trimming command from the input means 27. Then, monitoring is initiated to judge whether a trimming region specification has been input from the input means 27 (step S43). When the judgment in step S43 is affirmative, the processed image G2 is trimmed (step S44).

Thereafter, the processed image G1 that represents the processed image data S1 is displayed on the LCD monitor 24 (step S45) in response to an image display command from the input means 27. Next, the trimming frame T0 is displayed on the LCD monitor 24 (step S46) according to a trimming command from the input means 27. Then, monitoring is initiated to judge whether a trimming region specification has been input from the input means 27 (step S47). When the judgment in step S47 is affirmative, the processed image G1 is trimmed (step S48).

Then, monitoring is initiated to judge whether a synthesis command has been input from the input means 27 (step S49). When the judgment in step S49 is affirmative, the trimmed processed image GT2 and the trimmed processed image GT1 are combined (step S50). Finally, the synthesized image G0 that represents the synthesized image data SG2 is displayed on the LCD monitor 24 (step S51), thus completing the synthesizing process.

In this manner, processed image data S20 obtained by the cellular telephone with built in camera 2 and processed image data S1 obtained by the cellular telephone with built in camera 1 are combined to obtain synthesized image data SG2, which is displayed on the LCD monitor 24 in the present embodiment. Therefore, the synthesized image G0 that includes people who were not present at the photography scene during photography employing the cellular telephone with built in camera 2 may be obtained and displayed on the LCD monitor 24.

In addition, as the size of the LCD monitor 24 of the cellular telephone with built in camera 2 is not large, the synthesized image G0 is displayed at a suitable size for the LCD monitor 24 by trimming the processed images G1 and G2 prior to combining them.

Note that regarding the embodiment described above, the synthesized image data SG2 obtained by synthesis may be transmitted to the laboratory 4 via the image server 3, and the synthesized image data SG2 may be printed thereat.

In addition, in the embodiment described above, the processed data S20 and the processed data S2 are combined. Alternatively, a configuration may be adopted wherein unprocessed image data obtained by the cellular telephone with built in camera 2 and unprocessed image data S0 transmitted from the cellular telephone with built in camera 1 (that is, downloaded from the image server 3) are combined, and image processes are administered on the synthesized image data.

Further, in the embodiment described above, the processed images G1 and G2 are trimmed according to commands input by the user from the input means 27. Alternatively, a configuration may be adopted wherein the face regions of the processed images G1 and G2 are extracted, then trimming is performed automatically to include the extracted face regions.

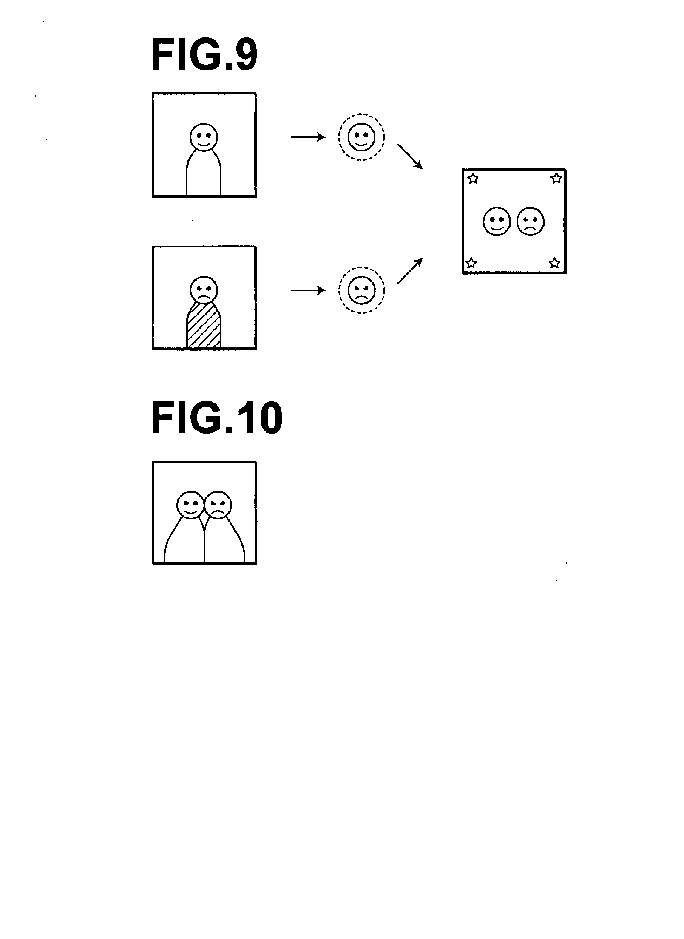

In addition, in the embodiment described above, the synthesized image G0 is generated by arranging the trimmed processed imaged G1 and G2 side by side. Alternatively, a configuration may be adopted wherein the face regions of the processed images G1 and G2 are extracted, and only the extracted face regions are combined with a desired background image to generate the synthesized image G0, as shown in Figure 9.

Further, the synthesized image G0 may be generated so that the extracted face regions overlap each other, as shown in Figure 10.

Still further, the synthesized image G0 is not limited to a combination of two processed images G1 and G2. A greater number of processed images may be combined to obtain the synthesized image G0.

## Claims

1. An image data processing method for a portable terminal apparatus comprising:
an imaging means for obtaining first image data by photography;
a communication means for transmitting and receiving data;
an image processing means for administering image processes on the first image data to obtain processed image data; and
a display means for performing various types of display; the method being implemented by:
combining other image data transmitted by other portable terminal apparatuses with the first image data to obtain synthesized image data.

2. An image data processing method as defined in claim 1, wherein the synthesized image data is obtained by trimming images representing the other image data and an image representing the first image data to match the size of the display means.

3. A portable terminal apparatus comprising:
an imaging means for obtaining first image data by photography;
a communication means for transmitting and receiving data;
an image processing means for administering image processes on the first image data to obtain processed image data;
a display means for performing various types of display; and
a synthesizing means for combining other image data transmitted by other portable terminal apparatuses with the first image data to obtain synthesized image data.

4. A portable terminal apparatus as defined in claim 3, wherein the synthesizing means performs trimming of the images representing the other image data and an image representing the first image data to match the size of the display means, to obtain the synthesized image data.

5. A program that causes a computer to execute an image data processing method for a portable terminal apparatus comprising:
an imaging means for obtaining first image data by photography;
a communication means for transmitting and receiving data;
an image processing means for administering image processes on the first image data to obtain processed image data; and
a display means for performing various types of display; wherein the program contains a step of:
combining other image data transmitted by other portable terminal apparatuses with the first image data to obtain synthesized image data.

6. A program as defined in claim 5, wherein the step of obtaining the synthesized image data performs trimming of the images representing the other image data and an image representing the first image data to match the size of the display means, to obtain the synthesized image data.
